# EUROPÄISCHE PATENTSCHRIFT

(11) **EP 0 504 740 B1**
(45) Veröffentlichungstag und Bekanntmachung des Hinweises auf die Patenterteilung: **15.01.1997**
(21) Anmeldenummer: 92104265.1
(22) Anmeldetag: 12.03.1992
(51) Int. Cl.: A01M 7/00, F04D 29/42

(54) **Verteilergebläse**
Spreader fan
Ventilateur disperseur

(30) Priorität: 20.03.1991 DE 4109066
(43) Veröffentlichungstag der Anmeldung: 23.09.1992
(73) Patentinhaber: Pak, Mjongsu, Prof. Dr.-Ing, 51491 Overath (DE)
(72) Erfinder: Pak, Mjongsu, Prof. Dr.-Ing, 51491 Overath (DE)
(74) Vertreter: Hoeger, Stellrecht & Partner

(56) Entgegenhaltungen:
- DE-A- 3 712 555
- GB-A- 741 975
- GB-A- 749 286
- US-A- 2 761 731
- US-A- 2 770 069
- US-A- 3 321 137
- US-A- 4 019 682

## Beschreibung

Die Erfindung betrifft ein Verteilergebläse für in der Landwirtschaft eingesetzte Chemikalien, insbesondere Pflanzenschutzmittel, umfassend ein von einem Antrieb um eine Achse rotierend angetriebenes Laufrad und eine sich an das Laufrad anschließende Luftführungsvorrichtung, welche einen sich austrittsseitig des Laufrades ausbildenden Luftstrom zu für die definierte Verteilung der Chemikalien definiert ausgerichteten Austrittsöffnungen für einen Verteilerluftstrom führt.

Einer der wichtigsten Gesichtspunkte in der Pflanzenschutztechnik ist die Verringerung des Verbrauchs von Pflanzenschutzmitteln. Das Pflanzenschutzmittel soll nur in dem Maße versprüht werden, wie es für den Pflanzenschutz notwendig ist. Dieses Ziel läßt sich theoretisch nur dann erreichen, wenn das gesamte versprühte Pflanzenschutzmittel die Pflanze erreicht und keine Verluste auftreten. So läßt sich zum einen die Umweltbelastung durch Pflanzenschutzmittel verringern und zum anderen lassen sich die Betriebskosten für Pflanzenschutzmittel senken.

Die effektive Besprühung mit Pflanzenschutzmitteln setzt einen gleichmäßigen Verteilerluftstrom voraus, durch den Pflanzenschutzmittel zur Pflanze getragen werden.

Zur Zeit werden sowohl Axial- als auch Radial- sowie Querstromgebläse für die Erzeugung des die Pflanzenschutzmittel tragenden Luftstroms eingesetzt.

Am verbreitetsten ist das Axialgebläse. Der in Axialrichtung (Fahrtrichtung des Gerätes) austretende Luftstrom wird in radiale Richtung (in die Ebene in etwa senkrecht zur Fahrtrichtung) umgelenkt, um Pflanzenschutzmittel zur Pflanze zu tragen. Um die Luft in die gewünschte Richtung zu richten, wird die Luftführungsvorrichtung mit entsprechenden Umlenkkanälen versehen. Häufig ist wegen des relativ großen Laufraddurchmessers wenig Platz zur ausreichenden Gestaltung der Umlenkkanäle vorhanden. Dadurch ist eine optimale Strömungsführung nicht immer gewährleistet.

Die in der Pflanzenschutztechnik eingesetzten Radialgebläse sind mit einem Spiralgehäuse versehen. Am Austrittsstutzen des Spiralgehäuses ist eine zusätzliche Einrichtung für die Luftführung angebracht. Diese Bauweise hat, abgesehen von der aufwendigen Konstruktion, den Nachteil, daß keine gleichmäßige Luft- und Geschwindigkeitsverteilung über der Applikationshöhe erreicht wird.

Seit einigen Jahren wird das in der Klimatechnik bekannte Querstromgebläse auch in der Pflanzenschutztechnik eingesetzt. Die Gebläseeinheiten werden mit senkrechter Drehachse des Laufrades angeordnet und vorzugsweise einseitig an der unteren oder oberen Seite angetrieben. Da die Luft aus dem Querstromgebläse in waagerechter Richtung austritt, muß das Gebläse entsprechend der Applikationshöhe eine große Ausdehnung in seiner Achsrichtung (in senkrechter Richtung) haben. Dies führt dann zum Teil zu mechanischen Problemen hinsichtlich der Stabilität von mit derartigen Verteilergebläsen versehenen Geräten. Außerdem ist die Konstruktion sehr aufwendig.

Die Aufgabe der Erfindung ist darin zu sehen, ein Verteilergebläse der gattungsgemäßen Art (siehe US-A-2 761 731) zu schaffen, welches einen möglichst gleichmäßigen Verteilerluftstrom erzeugt und dabei möglichst einfach und kostengünstig herstellbar ist sowie einen hohen Wirkungsgrad hinsichtlich seiner Luftleistung aufweist.

Diese Aufgabe wird erfindungsgemäß mit den Merkmalen des Anspruchs 1 gelöst.

Die vorliegende Erfindung hat somit die Idee zum Gegenstand, als Laufrad ein Radiallaufrad, das heißt ein üblicherweise in einem Radialgebläse eingesetztes Laufrad zu verwenden, die Luftführungsvorrichtung jedoch nicht wie bei üblichen Radialgebläsen auszubilden, sondern in der vorstehend genannten Weise.

Der Vorteil der erfindungsgemäßen Lösung ist darin zu sehen, daß durch die Kombination des Radiallaufrads mit der erfindungsgemäßen Luftführungsvorrichtung in effizienter Weise der vom Radiallaufrad erzeugte Luftstrom zur Ausbildung einer möglichst gleichmäßigen Luftstromwand als Verteilerluftstrom umlenkbar ist, ohne die Luftleistung des Radiallaufrades zu beeinträchtigen.

Ein besonders bevorzugtes Ausführungsbeispiel der erfindungsgemäßen Lösung sieht dabei vor, daß die Luftführungsvorrichtung spiralkanalfrei ausgebildet ist, das heißt, daß auf das üblicherweise bei einem Radialgebläse eingesetzte Spiralgehäuse verzichtet wird und stattdessen mittels der Abströmkanäle der Luftstrom von dem Radiallaufrad zu den Austrittsöffnungen geführt wird.

Prinzipiell könnte zwischen dem Radiallaufrad und den Abströmkanälen noch ein Zwischenraum frei sein, der die Ausbildung einer Azimutalströmung um das Radiallaufrad zuläßt. Besonders vorteilhaft ist es jedoch, wenn die Luftführungsvorrichtung als eine Azimutalströmung um das Radiallaufrad im wesentlichen unterdrückend ausgebildet ist. Damit läßt sich die Azimutalströmung vermeiden, die bei einer erfindungsgemäßen Luftführungsvorrichtung deren Effizienz verringern würde.

Besonders vorteilhaft ist es bei einem derartigen Ausführungsbeispiel, wenn die Luftführungsvorrichtung Strömungsleitelemente aufweist. Diese Strömungsleitelemente können einerseits dazu dienen, die Azimutalströmung im wesentlichen zu unterdrücken, andererseits aber auch dazu, den Luftstrom so umzulenken, daß ein gleichmäßiger Verteilerluftstrom entsprechend der vorliegenden Erfindung entsteht.

Die Strömungsleitelemente können beispielsweise als den sich austrittsseitig des Radiallaufrads ausbildenden Luftstrom umlenkende Wandelemente ausgebildet sein. Die Strömungsleitelemente können aber auch vorzugsweise durch Wände der Abströmkanäle gebildet sein. In diesem Fall sind die Abströmkanäle entsprechend geformt.

Besonders zweckmäßig ist es in diesem Fall, wenn die Luftführungsvorrichtung mehrere zu jeder Seite derselben führende Abströmkanäle aufweist, so daß sich durch die Vielzahl der Abströmkanäle eine definierte Führung des Luftstroms zur Erzeugung des gewünschten Verteilerluftstroms erreichen läßt.

Als besonders vorteilhaft hat es sich erwiesen, wenn die Abströmkanäle sich zu den Austrittsöffnungen hin erweitern und somit ein möglichst gleichmäßiger Luftstrom aus diesen Austrittsöffnungen austritt.

Insbesondere in dem Fall, in dem mehrere Abströmkanäle zu jeder Seite der Luftführungsvorrichtung führen, ist vorgesehen, daß auf jeder Seite mehrere Austrittsöffnungen in der Längsrichtung aufeinanderfolgend angeordnet sind.

Im Rahmen der bislang beschriebenen Ausführungsbeispiele wurde nichts Näheres darüber ausgesagt, ob mit dem erfindungsgemäßen Verteilergebläse ein beidseitiges Arbeiten stets durchgeführt werden soll. Ein effizienter Einsatz des erfindungsgemäßen Verteilergebläses läßt sich dann erreichen, wenn die Austrittsöffnungen symmetrisch zu einer Mittelebene der Luftführungsvorrichtung verlaufen, in welcher die Drehachse des Radiallaufrades liegt.

In diesem Fall lassen sich vorzugsweise Luftstromwände erzeugen, die im wesentlichen symmetrisch zur Mittelebene ausgebildet sind. Vorzugsweise breiten sich diese Luftstromwände dann auch im wesentlichen symmetrisch zur Mittelebene aus.

Im Rahmen der bislang beschriebenen Ausführungsbeispiele wurde nicht im Detail auf die Ausbildung der Abströmkanäle eingegangen. So sieht ein besonders bevorzugtes Ausführungsbeispiel vor, daß jeder Abströmkanal eine Einlaßöffnung aufweist, welche einer Austrittsfläche des Radiallaufrades zugewandt angeordnet ist.

Als besonders vorteilhaft hat es sich erwiesen, wenn die Einlaßöffnungen im wesentlichen parallel zu der Austrittsfläche des Radiallaufrades liegen.

Um eine optimale Luftleistung des erfindungsgemäßen Verteilergebläses zu erreichen, hat es sich als besonders vorteilhaft erwiesen, wenn um das Radiallaufrad herum mehrere Einlaßöffnungen angeordnet sind, wobei die Einlaßöffnungen einen Abstand voneinander aufweisen können.

Eine besonders vorteilhafte Luftleistung des erfindungsgemäßen Verteilergebläses ist dann erreichbar, wenn die Einlaßöffnungen sich zusammen mindestens über einen Winkelbereich von 180° - bezogen auf die Drehachse - der Austrittsfläche erstrecken. Noch vorteilhafter ist es, wenn dieser Winkelbereich mindestens 270° beträgt.

Besonders zweckmäßig ist es, wenn das Radiallaufrad im wesentlichen vollständig von den Einlaßöffnungen umgeben ist. In diesem Zusammenhang ist es zweckmäßig, wenn die Einlaßöffnungen der Abströmkanäle aneinander anschließen.

Darüber hinaus läßt sich ein im wesentlichen umlenkungsfreies Eintreten des Luftstroms in die Abströmkanäle dann erreichen, wenn parallel zu der Drehachse des Laufrades stehende Wandbereiche der Einlaßöffnungen im wesentlichen in Strömungsrichtung des Luftstroms verlaufen.

Bislang wurde nichts Näheres darüber ausgesagt, wie die Einlaßöffnungen geformt sein sollen. So hat es sich als besonders vorteilhaft erwiesen, wenn die Einlaßöffnungen sich in Richtung der Drehachse des Radiallaufrades über eine Breite desselben erstrecken.

Derartige Einlaßöffnungen lassen sich dann besonders vorteilhaft mit den Abströmkanälen kombinieren, wenn auch die Abströmkanäle einen im wesentlichen rechteckigen Querschnitt aufweisen.

Hinsichtlich des Abstandes der Eintrittsöffnungen von der Austrittsfläche des Radiallaufrades oder dem Radiallaufrad selbst wurden bislang keine Angaben gemacht. Besonders vorteilhaft ist es jedoch, wenn der Abstand nicht größer als ein Zweifaches der Breite der Austrittsfläche - gemessen parallel zur Drehachse des Radiallaufrades - ist. Noch vorteilhafter ist es, wenn der Abstand nicht größer als die Breite der Austrittsfläche des Radiallaufrades ist.

Dadurch, daß die Abströmkanäle in einer zur Drehachse des Radiallaufrades senkrechten Ebene liegen, entfällt jegliche Komplikation durch einen Versatz dieser Abströmkanäle aus der Ebene heraus und es läßt sich auch ferner in einfacher Weise die Führung des Luftstroms zur Ausbildung des Verteilerluftstroms realisieren.

Bei einem vorteilhaften ausgebildeten Ausführungsbeispiel ist vorgesehen, daß die Luftführungsvorrichtung zwei parallel zueinander ausgerichtete Längsseiten aufweist, in denen jeweils mindestens eine Austrittsöffnung liegt.

Insbesondere läßt sich auch die erfindungsgemäße Aufgabe durch den Einsatz eines mit parallelen Wänden versehenen Austrittsgehäuses als Luftführungsvorrichtung mit oder ohne Leitschaufeln für Turbogebläse lösen, die als Pflanzenschutzmittelsprühgebläse am meisten verbreitet sind.

Die erfindungsgemäße Aufgabe wird ferner durch eine Verteilvorrichtung für in der Landwirtschaft eingesetzte Chemikalien, umfassend einen Spritzmittelbehälter, eine Spritzmittelpumpe und ein Verteilergebläse mit den vorstehend beschriebenen Merkmalen gelöst.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:
- Fig. 1: eine schematische Skizze eines vereinfachten Ausführungsbeispiels eines erfindungsgemäßen Verteilergebläses;
- Fig. 2: einen Schnitt längs Linie 2-2 in Fig. 1;
- Fig. 3: eine Ansicht ähnlich Fig. 1 eines zweiten Ausführungsbeispiels;
- Fig. 4: einen Schnitt längs Linie 4-4 in Fig. 3;
- Fig. 5: eine Ansicht in Richtung des Pfeils C in Fig. 4;
- Fig. 6: eine perspektivische Darstellung des Einsatzes eines erfindungsgemäßen Verteilergebläses bei einer Aufsattelspritze und
- Fig. 7: eine perspektivische Darstellung eines Einsatzes eines erfindungsgemäßen Verteilergebläses an einem Behälterwagen.

Ein besonders einfach aufgebautes erstes Ausführungsbeispiel der Erfindung umfaßt ein parallelwandiges Austrittsgehäuse als Luftführungsvorrichtung mit oder ohne Leitschaufel für das Radiallaufrad mit vorwärts-, rückwärtsgekrümmten oder mit radialgerichteten Schaufeln für die Anwendung z.B. in der Pflanzenschutztechnik. Die Erfindung erstreckt sich des weiteren auf die besondere Bauweise des Radialgebläses, bei der das Gebläse nicht wie üblich aus dem Radiallaufrad und dem Spiralgehäuse, sondern aus der Kombination aus dem Radiallaufrad und dem in etwa parallelwandigen Austrittsgehäuse mit oder ohne Leitschaufel besteht. Durch die Verwendung des parallelwandigen Austrittsgehäuses mit oder ohne Leitschaufel wird die aus dem Radiallaufrad austretende Luft direkt zur Applikation zur Pflanze geleitet. Die Führung und Umlenkung der Luft in die gewünschte Richtung können zusätzlich durch in dem parallelwandigen Austrittsgehäuse eingebauten Leitschaufeln unterstützt werden.

Die Vorteile einer solchen Bauweise sind die bessere Luft- und gleichmäßigere Geschwindigkeitsverteilung über der Applikationshöhe und die einfache und preiswertere Bauweise.

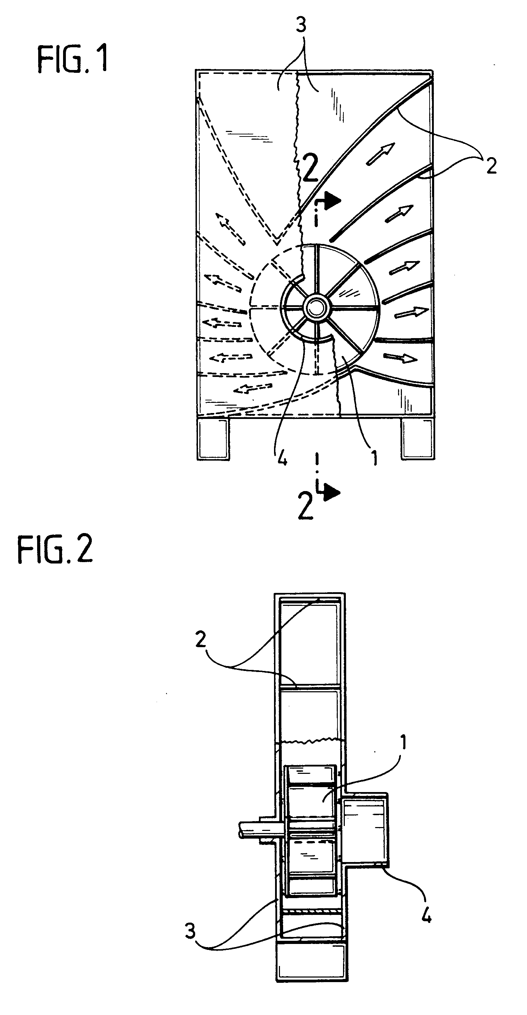

In Fig. 1 und 2 ist das Prinzip dieser Erfindung dargestellt. Ein eine Luftführungsvorrichtung bildendes parallelwandiges Austrittsgehäuse besteht aus zwei parallelen oder gegeneinander leicht geneigten Platten, die eine vordere und hintere Gehäusewand 3 des Gebläses bilden. Die beiden Platten haben einen Abstand von etwa der Austrittsbreite eines Laufrades 1. Zwischen den beiden Platten können zur besseren Strömungsführung Leitschaufeln 2 angeordnet werden, die von einem Laufradaustritt bis zu einer seitlichen Austrittsöffnung des parallelwandigen Austrittsgehäuses reichen. Die Form der Leitschaufeln 2 ist entsprechend einem Strömungswinkel eines sich austrittsseitig des Laufrades ausbildenden Luftstroms und einem gewünschten Strömungswinkel an den Austrittsöffnungen des parallelwandigen Austrittsgehäuses zu gestalten. An der Vorderwand ist ein Ansaugtrichter 4 des Gebläses angeschlossen.

Zur Prüfung der Effektivität des Verteilergebläses nach dieser Erfindung wurde ein Prototyp gebaut. Er besteht aus einem halboffenen Radiallaufrad mit radial gerichteten Schaufeln und einem parallelwandigen Austrittsgehäuse mit Leitschaufeln. Am Austritt des parallelwandigen Austrittsgehäuses wurden Geschwindigkeitsabtastungen vorgenommen. Die Meßergebnisse zeigen eine gleichmäßige Geschwindigkeitsverteilung über der Höhe und bestätigen die Erwartung dieser Erfindung.

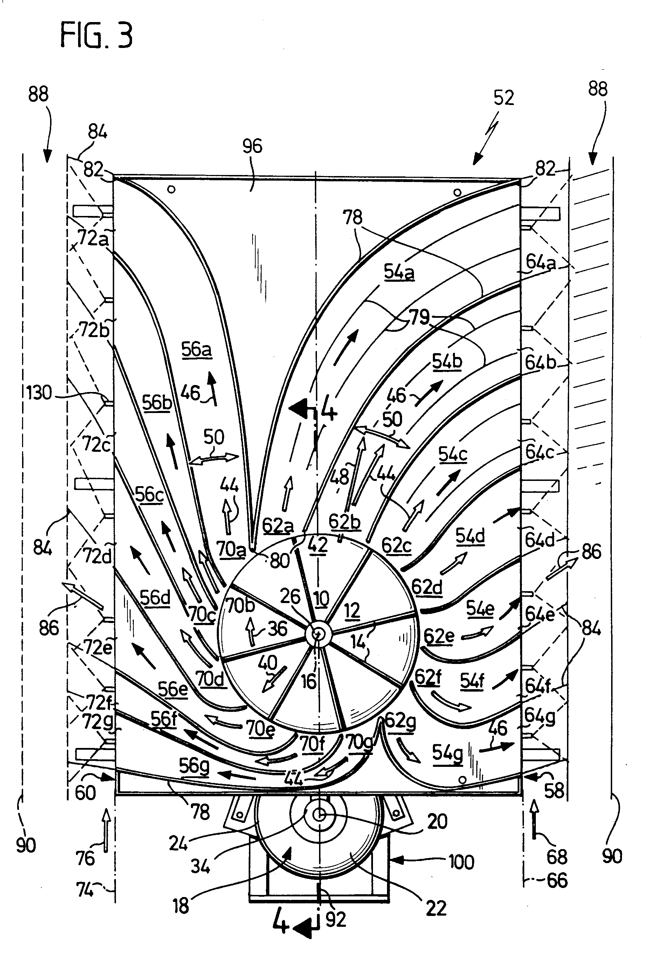

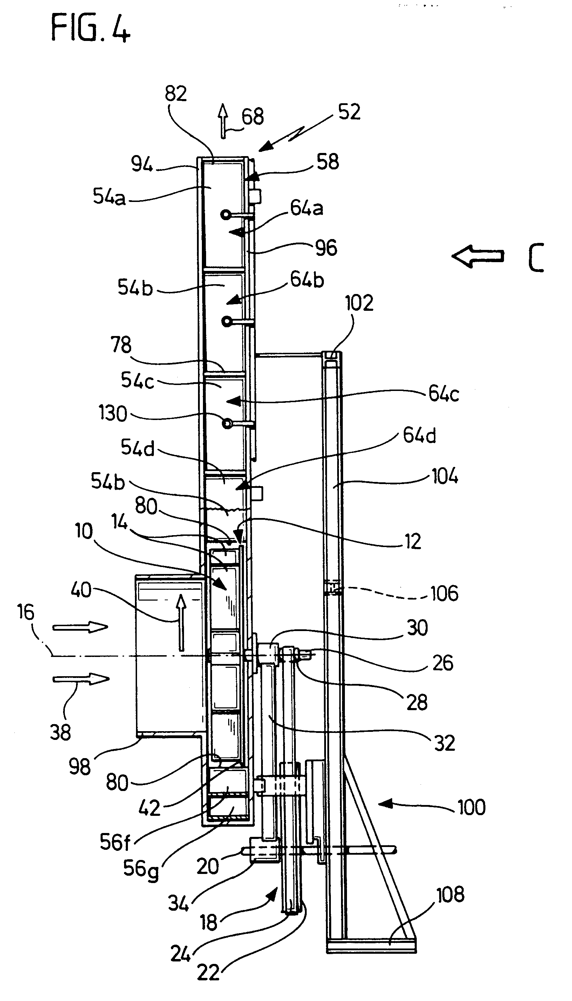

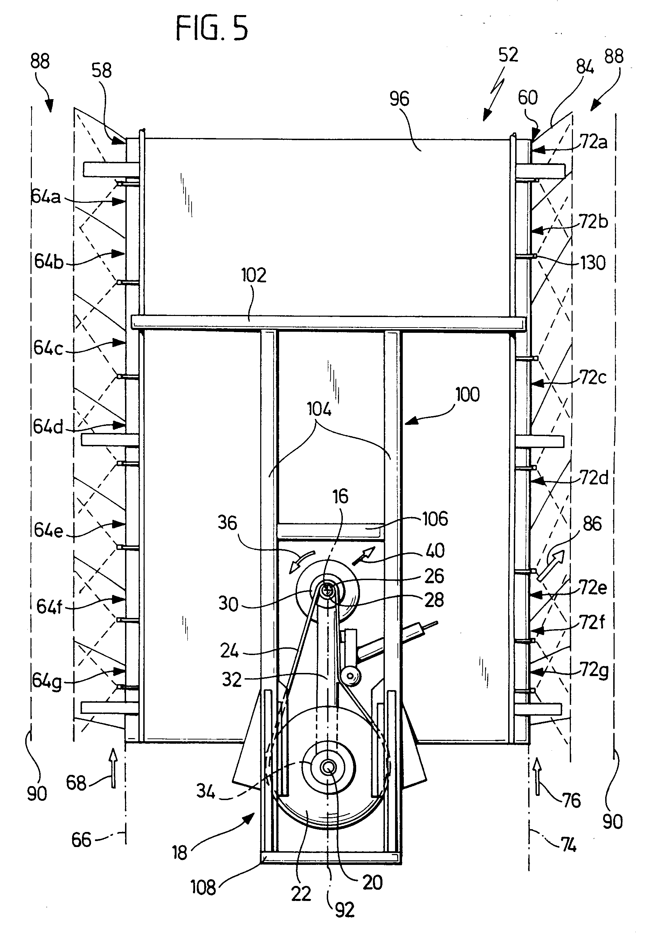

Ein zweites Ausführungsbeispiel eines erfindungsgemäßen Verteilergebläses für in der Landwirtschaft eingesetzte Chemikalien, dargestellt in den Fig. 3 bis 5, insbesondere Pflanzenschutzmittel, umfaßt ein als Ganzes mit 10 bezeichnetes Radiallaufrad, welches üblicherweise in einem Radialgebläse Verwendung findet. Dieses Radiallaufrad 10 umfaßt seinerseits einen scheibenförmigen Laufradträger 12, auf welchem Schaufeln 14 sitzen, welche im einfachsten Falle sich in radialer Richtung zu einer Drehachse 16 des Radiallaufrades 10 erstrecken. Der Laufradträger 12 ist im einfachsten Fall eine senkrecht auf der Drehachse 16 stehende Scheibe, an welcher die Schaufeln 14 gehalten sind.

Dieses Radiallaufrad ist beispielsweise mittels einer Antriebsvorrichtung 18 angetrieben, die eine Antriebswelle 20 aufweist, welche zum Beispiel von einer Zapfwelle einer landwirtschaftlichen Zugmaschine angetrieben sein kann. Diese Antriebswelle treibt ihrerseits eine auf dieser sitzende Riemenscheibe 22, welche über einen Riementrieb 24 eine auf einer Antriebswelle 26 des Radiallaufrades 10 sitzende Riemenscheibe 28 treibt. Die Antriebswelle 26 ist zwischen der Riemenscheibe 28 und dem Radiallaufrad 10 noch in einem Lagerblock 30 drehbar gelagert, welcher mit einer Strebe 32 mit einem Lagerblock 34 zur drehbaren Lagerung der Antriebswelle 20 und der Riemenscheibe 22 verbunden ist.

Das in einer Drehrichtung 36 um die Drehachse 16 rotierend angetriebene Radiallaufrad 10 saugt Luft in einer zur Drehachse 16 parallelen Ansaugrichtung 38 an und fördert diese bezüglich der Drehachse 16 in radialer Richtung 40 in Richtung auf eine Austrittsfläche 42, welche eine das Radiallaufrad 10 an seiner Außenseite umschließende streifenförmige Zylinderfläche mit der Drehachse 16 als Zylinderachse darstellt, wobei eine Breite der streifenförmigen Zylinderfläche einer Breite der Schaufeln 14 in Richtung der Drehachse 16 entspricht.

Durch die Austrittsfläche 42 tritt ein Luftstrom 44 hindurch, welcher eine Strömungsrichtung 46 aufweist, welche aus einer Radialkomponente 48 und einer Azimutalkomponente 50 zusammengesetzt ist, so daß die Strömungsrichtung 46 mit der radialen Komponente 48 einen spitzen Winkel einschließt.

Dieser Luftstrom 44 wird von einer als Ganzes mit 52 bezeichneten Luftführungsvorrichtung 52 aufgenommen, welche eine Reihe von Abströmkanälen 54a bis 54g und 56a bis 56g aufweist und mit den Abströmkanälen 54a bis 54g einen Teil des Luftstroms 44 zu einer Längsseite 58 der Luftführungsvorrichtung und mit den Abströmkanälen 56a bis 56g zu einer der Längsseite 58 gegenüberliegenden Längsseite 60 der Luftführungsvorrichtung 52 führt.

Die Abströmkanäle 54a bis 54g weisen dabei Eintrittsöffnungen 62a bis 62g und Austrittsöffnungen 64a bis 64g auf, wobei die Eintrittsöffnungen 62a bis 62g der Austrittsfläche 42 zugewandt und nahe derselben nebeneinanderliegend um ca. die Hälfte der Austrittsfläche 42 herum angeordnet sind, während die Austrittsöffnungen 64 in einer Ebene 66 liegen, welche parallel zu der Längsseite 58 verläuft und in einer Längsrichtung 68 aufeinanderfolgend angeordnet sind.

In gleicher Weise umfassen die Abströmkanäle 56a bis 56g Eintrittsöffnungen 70a bis 70g, die ebenfalls nebeneinanderliegend um die andere Hälfte der Austrittsfläche 42 herum und nahe derselben sowie dieser zugewandt angeordnet sind, sowie Austrittsöffnungen 72, welche ihrerseits in einer Ebene 74 liegen, die parallel zur Längsseite 60 verläuft. Die Austrittsöffnungen 72 sind dabei ebenfalls in einer parallel zur Ebene 74 verlaufenden Längsrichtung 76 aufeinanderfolgend angeordnet.

Bei dem in Fig. 3 bis 5 dargestellten zweiten Ausführungsbeispiel eines erfindungsgemäßen Verteilergebläses haben die Abströmkanäle 54 und 56 einen ungefähr rechteckförmigen Querschnitt und sind durch Leitwände 78 voneinander getrennt, wobei zwei nebeneinanderliegende Abströmkanäle, beispielsweise die Abströmkanäle 54a und 54b, durch ein und dieselbe Leitwand voneinander getrennt sind. Diese Leitwände verlaufen einerseits parallel zur Drehachse 16 und in einem die Einlaßöffnungen 62 und 70 begrenzenden Wandbereich im wesentlichen parallel zur Strömungsrichtung 46 und in einem die Austrittsöffnungen 64 und 72 begrenzenden Wandbereich 82 gegenüber einer Senkrechten zu den Ebenen 66 und 74 geringfügig in dieselbe Richtung geneigt, so daß ein Verteilerluftstrom 84 mit einer Verteilerluftströmungsrichtung 86 entsteht, die in Richtung der Längsrichtungen 68 und 76 gleich ausgebildet ist und dadurch eine Luftstromwand 88 mit im wesentlichen zur Ebene 66 parallelen Strömungsfronten 90 bildet, wobei die Strömungsfronten 90 sich in der Verteilerluftströmungsrichtung 86 ausbreiten. Die sich auf beiden Längsseiten 58 und 60 der Luftführungsvorrichtung 52 ausbildenden Luftstromwände 88 sind dabei vorzugsweise symmetrisch zu einer Mittelebene 92 der Luftführungsvorrichtung 52 ausgebildet, in welcher auch die Drehachse 16 liegt.

Besonders bei hohen Luftgeschwindigkeiten läßt sich eine noch gleichmäßigere Ausbildung der Luftstromwände 88 dann erreichen, wenn in den Abströmkanälen 54 und 56 Leitwände oder -schaufeln 79 angeordnet sind, die sich nicht über die gesamte Länge der Abströmkanäle 54, 56 erstrecken, sondern nur über einen Teil derselben, wie beispielhaft bei den Kanälen 54a bis 54c in Fig. 3 eingezeichnet.

Bei dem bevorzugten Ausführungsbeispiel liegen die Eintrittsöffnungen 62 und 70 der Abströmkanäle 54 und 56 nahe bei der Austrittsfläche 42 des Radiallaufrades 10 und sind parallel zu der Austrittsfläche 42 und dieser zugewandt ausgerichtet. Damit erfolgt eine Übernahme des Luftstroms 44 in die Abströmkanäle 54 und 56 zunächst umlenkungsfrei und ohne Ausbildung einer sich in Richtung der Azimutalkomponente 50 ausbreitenden Azimutalströmung. Somit wird ca. die Hälfte des Luftstroms 44 zu den Austrittsöffnungen 64a bis 64g und die andere Hälfte des Luftstroms 44 zu den Austrittsöffnungen 72a bis 72g geführt umgelenkt und auf diese Austrittsöffnungen 64 und 72 so verteilt, daß die Luftstromwände 88 im wesentlichen parallele Strömungsfronten 90 aufweisen. Hierzu sind die Abströmkanäle 54 vorzugsweise so ausgebildet, daß sie sich zu den Austrittsöffnungen 64 und 72 hin bezüglich eines Abstandes der Leitwände 78 erweitern.

Die Abströmkanäle 54 und 56 sind ferner durch eine Vorderwand 94 und eine Rückwand 96 der Luftführungsvorrichtung begrenzt, welche in etwa parallel und im Abstand voneinander angeordnet sind und ungefähr senkrecht zur Drehachse 16 stehen. Dabei verbinden vorzugsweise die Leitwände 78 die Vorderwand 94 und die Rückwand 96.

Ferner sitzt auf der Vorderwand 94 noch ein Ansaugtrichter 98, welcher die in Ansaugrichtung 38 in das Radiallaufrad 10 einströmende Luft führt.

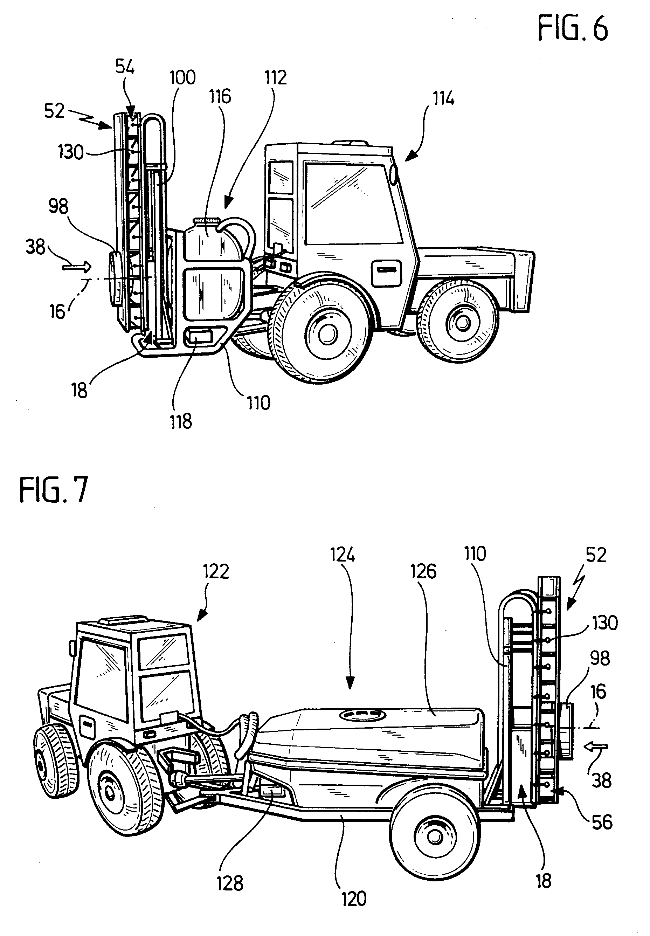

Sowohl die Luftführungsvorrichtung 52 als auch die Lagerblöcke 30 und 34 sowie die Strebe 32 sind an einem Traggestell 100 gehalten, das, wie in Fig. 3 dargestellt, eine obere Querstrebe 102 und zwei parallel zueinander verlaufende Längsstreben 104 aufweist, die durch weitere Querstreben 106 und 108 miteinander verbunden sind und einen stabilen Rahmen bilden. Das Traggestell 100 ist dabei beispielsweise Teil eines Tragrahmens 110 einer als Ganzes mit 112 bezeichneten und in Fig.6 dargestellten Aufsattelspritze, die an einer Dreipunktaufhängung eines Schleppers 114 montierbar ist und auch noch zusätzlich einen Behälter 116 sowie eine Pumpe 118 für Spritzflüssigkeit trägt.

Alternativ dazu ist das Traggestell 100 an einem Fahrgestell 120 eines von einem Schlepper 122 gezogenen und in Fig. 7 dargestellten Behälterwagens 124 gehalten, der ebenfalls einen Behälter 126 sowie eine Pumpe 128 für Spritzflüssigkeit trägt.

Das Ausbringen der Spritzflüssigkeit mittels der Luftstromwand erfolgt, wie in Fig. 3 dargestellt, durch in den Austrittsöffnungen 64 und 72 oder nahe derselben angeordnete Sprühdüsen 130, die von der Pumpe 118 bzw. 128 mit Spritzflüssigkeit, beispielsweise Pflanzenschutzmittel, versorgt werden und diese in Form eines Sprühkegels bzw. Sprühfächers in dem Verteilerluftstrom 84 gleichmäßig verteilen, so daß die Spritzflüssigkeit von dem Verteilerluftstrom in Form der Luftstromwand 88 in Richtung der beiderseits der Luftführungsvorrichtung 52 angeordneten Pflanzenreihen getragen wird.

## Patentansprüche

1. Verteilergebläse für in der Landwirtschaft eingesetzte Chemikalien, insbesondere Pflanzenschutzmittel, umfassend ein von einem Antrieb um eine Achse rotierend angetriebenes Radiallaufrad (10) und eine sich an das Radiallaufrad (10) anschließende Luftführungsvorrichtung (52), welche einen sich austrittsseitig des Radiallaufrads (10) ausbildenden Luftstrom (44) in seiner durch das Radiallaufrad (10) vorgegebenen Strömungsrichtung (46) im wesentlichen umlenkungsfrei über mehrere Abströmkanäle (54, 56) zu für die definierte Verteilung der Chemikalien definiert ausgerichteten Austrittsöffnungen (64, 72) für einen Verteilerluftstrom führt,
**dadurch gekennzeichnet,**
daß alle den Luftstrom (44) vom Radiallaufrad (10) aufnehmenden Abströmkanäle (54, 56) von Laufradseitigen Eintrittsöffnungen (62, 70) bis zu den Austrittsöffnungen (64, 72) in derselben zur Drehachse (16) des Radiallaufrads senkrechten Ebene liegen, daß die Austrittsöffnungen (64, 72) nur auf gegenüberliegenden Seiten (58, 60) der Luftführungsvorrichtung (52) liegen und daß mittels der zu den Austrittsöffnungen (64, 72) geführten Abströmkanäle (54, 56) der Luftführungsvorrichtung (52) auf jeder Seite (58, 60) derselben eine in einer zu einer Ebene (66) parallel verlaufenden Längsrichtung (68, 76) langgestreckte und im wesentlichen gleichmäßig ausgebildete Luftstromwand (88) als Verteilerluftstrom (84) erzeugbar ist.

2. Verteilergebläse nach Anspruch 1, dadurch gekennzeichnet, daß die Luftführungsvorrichtung (52) spiralkanalfrei ausgebildet ist.

3. Verteilergebläse nach einem der voranstehenden Ansprüche, dadurch gekennzeichnet, daß die Luftführungsvorrichtung (52) als eine Azimutalströmung um das Radiallaufrad (10) im wesentlichen unterdrückend ausgebildet ist.

4. Verteilergebläse nach einem der voranstehenden Ansprüche, dadurch gekennzeichnet, daß die Luftführungsvorrichtung (52) Strömungsleitelemente (78) aufweist.

5. Verteilergebläse nach einem der voranstehenden Ansprüche, dadurch gekennzeichnet, daß die Luftführungsvorrichtung (52) mehrere zu jeder Seite (58, 60) derselben führende Abströmkanäle (54, 56) aufweist.

6. Verteilergebläse nach einem der voranstehenden Ansprüche, dadurch gekennzeichnet, daß sich die Abstromkanäle (54, 56) zu den Austrittsöffnungen (64, 72) hin erweitern.

7. Verteilergebläse nach einem der voranstehenden Ansprüche, dadurch gekennzeichnet, daß auf jeder Seite (58, 60) mehrere Austrittsöffnungen (64, 72) in einer Längsrichtung (68, 76) aufeinanderfolgend angeordnet sind.

8. Verteilergebläse nach einem der voranstehenden Ansprüche, dadurch gekennzeichnet, daß die Austrittsebenen (64, 72) symmetrisch zu einer Mittelebene (92) der Luftführungsvorrichtung (52) verlaufen, in welcher die Drehachse (16) des Radiallaufrads (10) liegt.

9. Verteilergebläse nach einem der voranstehenden Ansprüche, dadurch gekennzeichnet, daß die erzeugten Luftstromwände (88) im wesentlichen symmetrisch zur Mittelebene (92) ausgebildet sind.

10. Verteilergebläse nach Anspruch 9, dadurch gekennzeichnet, daß die Luftstromwände (88) sich im wesentlichen symmetrisch zur Mittelebene (92) ausbreiten.

11. Verteilergebläse nach einem der voranstehenden Ansprüche, dadurch gekennzeichnet, daß jeder Abströmkanal (54, 56) eine Einlaßöffnung (62, 70) aufweist, welche einer Austrittsfläche (42) des Radiallaufrads (10) zugewandt angeordnet ist.

12. Verteilergebläse nach Anspruch 11, dadurch gekennzeichnet, daß die Einlaßöffnungen (62, 70) im wesentlichen parallel zu der Austrittsfläche (42) des Radiallaufrads (10) liegen.

13. Verteilergebläse nach Anspruch 11 oder 12, dadurch gekennzeichnet, daß um das Radiallaufrad (10) herum mehrere Einlaßöffnungen (62, 70) angeordnet sind.

14. Verteilergebläse nach Anspruch 13, dadurch gekennzeichnet, daß die Einlaßöffnungen (62, 70) sich, bezogen auf die Drehachse, über einen Winkelbereich von mindestens 180° über die Austrittsfläche (42) erstrecken.

15. Verteilergebläse nach Anspruch 13 oder 14, dadurch gekennzeichnet, daß das Radiallaufrad (10) im wesentlichen vollständig von den Einlaßöffnungen (62, 70) umgeben ist.

16. Verteilergebläse nach einem der Ansprüche 11 bis 15, dadurch gekennzeichnet, daß in etwa parallel zu der Drehachse (16) des Laufrades (10) stehende Wandbereiche (80) der Einlaßöffnungen (62, 70) im wesentlichen in Strömungsrichtung (46) des Luftstroms (44) verlaufen.

17. Verteilergebläse nach einem der Ansprüche 11 bis 16, dadurch gekennzeichnet, daS die Einlaßöffnungen (62, 70) sich in Richtung der Drehachse (16) des Radiallaufrads in etwa über eine Breite (B) desselben erstrecken.

18. Verteilvorrichtung für in der Landwirtschaft eingesetzte Chemikalien, insbesondere Pflanzenschutzmittel, umfassend einen Spritzmittelbehälter, eine Spritzmittelpumpe und ein Verteilergebläse, dadurch gekennzeichnet, daß das Verteilergebläse gemäß einem der Ansprüche 1 bis 17 ausgebildet ist.

## Claims

1. Distributor fan for chemicals used in agriculture, in particular pesticides, comprising a radial impeller (10) rotatingly driven by a drive means about an axis, and an air-conducting device (52) adjoining the radial impeller (10) and conducting an air flow (44) forming on the outlet side of the radial impeller (10) in its direction of flow (46) predetermined by the radial impeller (10) essentially free of diversion over several outflow channels (54, 56) to outlet openings (64, 72) for a distributor air flow which are aligned in a defined manner for defined distribution of the chemicals, characterized in that all outflow channels (54, 56) receiving the air flow (44) from the radial impeller (10) extend from inlet openings (62, 70) on the impeller side as far as the outlet openings (64, 72) in the same plane perpendicular to the axis of rotation (16) of the radial impeller, in that the outlet openings (64, 72) only lie on opposite sides (58, 60) of the air-conducting device (52), and in that by means of the outflow channels (54, 56) of the air-conducting device (52) which lead to the outlet openings (64, 72) there is producible on either side (58, 60) of the air-conducting device in a longitudinal direction (68, 76) extending parallel to a plane (66) an elongated air flow wall (88) of essentially uniform configuration as distributor air flow (84).

2. Distributor fan as defined in claim 1, characterized in that the air-conducting device (52) is designed such that it is free of spiral channels.

3. Distributor fan as defined in one of the preceding claims, characterized in that the air-conducting device (52) is designed so as to substantially suppress an azimuthal flow around the radial impeller (10).

4. Distributor fan as defined in one of the preceding claims, characterized in that the air-conducting device (52) comprises flow-directing elements (78).

5. Distributor fan as defined in one of the preceding claims, characterized in that the air-conducting device (52) comprises several outflow channels (54, 56) leading to each side (58, 60) thereof.

6. Distributor fan as defined in one of the preceding claims, characterized in that the outflow channels (54, 56) widen towards the outlet openings (64, 72).

7. Distributor fan as defined in one of the preceding claims, characterized in that on each side (58, 60), several outlet openings (64, 72) are arranged in succession in a longitudinal direction (68, 76).

8. Distributor fan as defined in one of the preceding claims, characterized in that the outlet planes (64, 72) extend symmetrically in relation to a centre plane (92) of the air-conducting device (52) in which the axis of rotation (16) of the radial impeller (10) lies.

9. Distributor fan as defined in one of the preceding claims, characterized in that the air flow walls (88) produced are formed essentially symmetrically in relation to the centre plane (92).

10. Distributor fan as defined in claim 9, characterized in that the air flow walls (88) spread out essentially symmetrically in relation to the centre plane (92).

11. Distributor fan as defined in one of the preceding claims, characterized in that each outflow channel (54, 56) has an inlet opening (62, 70) which is arranged facing an outlet area (42) of the radial impeller (10).

12. Distributor fan as defined in claim 11, characterized in that the inlet openings (62, 70) lie essentially parallel to the outlet area (42) of the radial impeller (10).

13. Distributor fan as defined in claim 11 or 12, characterized in that several inlet openings (62, 70) are arranged around the radial impeller (10).

14. Distributor fan as defined in claim 13, characterized in that the inlet openings (62, 70) extend, in relation to the axis of rotation, over an angular range of at least 180° over the outlet area (42).

15. Distributor fan as defined in claim 13 or 14, characterized in that the radial impeller (10) is essentially completely surrounded by the inlet openings (62, 70).

16. Distributor fan as defined in one of claims 11 to 15, characterized in that wall areas (80) of the inlet openings (62, 70) extending approximately parallel to the axis of rotation (16) of the impeller (10) extend essentially in the direction of flow (46) of the air flow (44).

17. Distributor fan as defined in one of claims 11 to 16, characterized in that the inlet openings (62, 70) extend in the direction of the axis of rotation (16) of the radial impeller approximately over a width (B) of the latter.

18. Distributor device for chemicals used in agriculture, in particular pesticides, comprising a spray container, a spray pump and a distributor fan, characterized in that the distributor fan is designed in accordance with one of claims 1 to 17.

## Revendications

1. Ventilateur répartiteur pour des produits chimiques mis en oeuvre dans l'agriculture, en particulier des produits phytosanitaires, comprenant une roue à aubes radiale (10) entraînée en rotation autour d'un axe par un organe d'entraînement et un dispositif de guidage d'air (52) qui est raccordé à la roue à aubes radiale (10) et qui guide un courant d'air (44), formé du côté sortie de la roue à aubes radiale (10), dans son sens d'écoulement (46) prédéterminé par la roue à aubes radiale (10) d'une manière sensiblement sans déviation, par l'intermédiaire de plusieurs canaux d'évacuation (54, 56), vers des ouvertures de sortie (64, 72) d'un courant d'air de répartiteur qui sont orientées de manière définie pour la répartition définie des produits chimiques,
caractérisé en ce que tous les canaux d'évacuation (54, 56) qui reçoivent le courant d'air (44) depuis la roue à aubes radiale (10) se trouvent, depuis des ouvertures d'entrée (62, 70) du côté roue à aubes jusqu'aux ouvertures de sortie (64, 72), dans le même plan perpendiculaire à l'axe de rotation (16) de la roue à aubes radiale, en ce que les ouvertures de sortie (64, 72) se trouvent uniquement sur des côtés opposés (58, 60) du dispositif de guidage d'air (52), et en ce que, au moyen des canaux d'évacuation (54, 56), guidés vers les ouvertures de sortie (64, 72), du dispositif de guidage d'air (52), une paroi de courants d'air (88), qui s'étend longitudinalement suivant une direction longitudinale (68, 76) disposée parallèlement à un plan (66) et est réalisée de manière sensiblement uniforme, peut être produite comme courant d'air de répartiteur (84) de chaque côté (58, 60) du dispositif de guidage d'air.

2. Ventilateur répartiteur suivant la revendication 1, caractérisé en ce que le dispositif de guidage d'air (52) est réalisé sans canal spiralé.

3. Ventilateur répartiteur suivant l'une des revendications précédentes, caractérisé en ce que le dispositif de guidage d'air (52) est réalisé sous une forme supprimant sensiblement un écoulement azimutal autour de la roue à aubes radiale (10).

4. Ventilateur répartiteur suivant l'une des revendications précédentes, caractérisé en ce que le dispositif de guidage d'air (52) présente des éléments de guidage d'écoulement (78).

5. Ventilateur répartiteur suivant l'une des revendications précédentes, caractérisé en ce que le dispositif de guidage d'air (52) présente plusieurs canaux d'évacuation (54, 56) guidant vers chaque côté (58, 60) de ce dispositif.

6. Ventilateur répartiteur suivant l'une des revendications précédentes, caractérisé en ce que les canaux d'évacuation (54, 56) s'élargissent en direction des ouvertures de sortie (64, 72).

7. Ventilateur répartiteur suivant l'une des revendications précédentes, caractérisé en ce que, de chaque côté (58, 60), plusieurs ouvertures de sortie (64, 72) sont agencées en succession suivant une direction longitudinale (68, 76).

8. Ventilateur répartiteur suivant l'une des revendications précédentes, caractérisé en ce que les plans de sortie (64, 72) s'étendent symétriquement par rapport à un plan médian (92) du dispositif de guidage d'air (52) dans lequel se trouve l'axe de rotation (16) de la roue à aubes radiale (10).

9. Ventilateur répartiteur suivant l'une des revendications précédentes, caractérisé en ce que les parois de courants d'air (88) produites sont réalisées de manière sensiblement symétrique par rapport à un plan médian (92).

10. Ventilateur répartiteur suivant la revendication 9, caractérisé en ce que les parois de courants d'air (88) se propagent de manière sensiblement symétrique par rapport au plan médian (92).

11. Ventilateur répartiteur suivant l'une des revendications précédentes, caractérisé en ce que chaque canal d'évacuation (54, 56) présente une ouverture d'entrée (62, 70) qui est agencée de manière adjacente à une surface de sortie (42) de la roue à aubes radiale (10).

12. Ventilateur répartiteur suivant la revendication 11, caractérisé en ce que les ouvertures d'entrée (62, 70) sont situées sensiblement parallèlement à la surface de sortie (42) de la roue à aubes radiale (10).

13. Ventilateur répartiteur suivant l'une des revendications 11 et 12, caractérisé en ce que plusieurs ouvertures d'entrée (62, 70) sont agencées autour de la roue à aubes radiale (10).

14. Ventilateur répartiteur suivant la revendication 13, caractérisé en ce que les ouvertures d'entrée (62, 70) s'étendent par-dessus la surface de sortie (42) sur une zone angulaire d'au moins 180°, par rapport à l'axe de rotation.

15. Ventilateur répartiteur suivant l'une des revendications 13 et 14, caractérisé en ce que la roue à aubes radiale (10) est sensiblement totalement entourée par les ouvertures d'entrée (62, 70).

16. Ventilateur répartiteur suivant l'une des revendications 11 à 15, caractérisé en ce que des zones de paroi (80), situées approximativement parallèlement à l'axe de rotation (16) de la roue à aubes (10), des ouvertures d'entrée (62, 70) s'étendent sensiblement suivant le sens d'écoulement (46) du courant d'air (44).

17. Ventilateur répartiteur suivant l'une des revendications 11 à 16, caractérisé en ce que les ouvertures d'entrée (62, 70) s'étendent, suivant la direction de l'axe de rotation (16) de la roue à aubes radiale, approximativement sur une largeur (B) de celle-ci.

18. Dispositif d'épandage pour produits chimiques mis en oeuvre dans l'agriculture, en particulier pour produits phytosanitaires, comprenant un réservoir de produit à pulvériser, une pompe de produit à pulvériser et un ventilateur répartiteur, caractérisé en ce que le ventilateur répartiteur est réalisé conformément à une des revendications 1 à 17.
